# EUROPEAN PATENT APPLICATION

(11) **EP 1 469 087 A1**
(43) Date of publication of application: **20.10.2004**
(21) Application number: 03076132.4
(22) Date of filing: 17.04.2003
(51) Int. Cl.: C21C 7/076, C21C 7/072, C21C 7/04, C21C 7/064

(54) **Method for reducing the amount of impurities in molten steel**

(71) Applicant: Corus Technology BV, 1970 CA Ijmuiden (NL)
(72) Inventor: Koopmans, Pieter, 1963 DH Heemskerk (NL)
(74) Representative: Kruit, J., Ir.

(57) **Abstract**

Method for reducing the amount of impurities in molten steel wherein the molten steel is at least partially covered by a layer of slag and the slag layer comprises at least one component and wherein at least some of the slag layer is entrained into the molten steel and a component or components of the slag layer react with at least one type of impure element in the molten steel characterised in that at least some of the slag layer is entrained into the molten steel by means of at least one gas jet emitted from above the molten steel.

## Description

The present invention relates to a method for reducing the amount of impurities in molten steel wherein the molten steel is at least partially covered by a layer of slag and the slag layer comprises at least one component and wherein at least some of the slag layer is entrained into the molten steel and a component or components of the slag layer react with at least one type of impure element in the molten steel.

The term "impure element" or "impurity" refers to any element other than iron whose presence may affect the physical properties or further processing of the steel. The term "entraining" refers to a fluid carrying particles, or another fluid, along in its flow.

It is known in the metallurgical art to entrain slag into molten steel produced in a converter or electric arc furnace in order to desulphurise the steel. The process usually occurs in a ladle or ladle furnace where the molten steel is covered with a CaO based slag. In order to be able to most efficiently entrain the slag into the molten steel vigorous stirring of the steel is required. This is typically achieved by bubbling argon gas through a plug or plugs in the base of the ladle. Very high gas bubbling rates in the order of 5x10⁻³ Nm³/min/tonne liquid steel are required in order to achieve good mixing of slag and metal, leading to a high desulphurisation rate. Lower gas bubbling rates result in long increases in the amount of time required for the desulphurisation of the molten steel.

The object of the present invention is to provide an improved method for reducing the amount of impurities in molten steel. It is a further object to provide a more efficient method for reducing the amount of impurities in molten steel. It is a further object to reduce the amount of gas needed for bottom stirring or remove the need for bottom stirring entirely during a process to reduce the amount of impurities in molten steel, without causing an increase in the amount of time required for the process.

These objects are achieved by entraining at least some of the slag layer into the molten steel by means of at least one gas jet emitted from above the steel.

In the prior art method described above the mixing energy is dispersed throughout the bath in order to agitate the slag/metal interface. The present invention has the advantage that the energy required for mixing the slag and metal is directed to the top of the ladle which is where the mixing energy is required. Entraining at least some of slag layer into the steel by means of at least one gas jet emitted from above the molten steel thereby avoids the need for very high gas bubbling rates through plugs in the bottom of the vessel.

The gas jet(s) is preferably positioned above the upper surface of the slag layer and preferably optimally configured to penetrate through the slag layer into the molten steel whilst entraining an optimal amount of slag as deep into the molten steel as possible. The gas jet may be supersonic. The gas jet preferably comprises an inert gas such as argon, which does not react with the steel or the impurities itself.

Coherent jets of gas are particularly suitable for carrying out the method of the present invention. An example of a system for producing a coherent jet of gas is described in EP 0866140. A coherent jet is a jet that entrains little of the ambient medium through which it passes for a greater distance from the nozzle through which the jet is emitted, in comparison with a conventional turbulent jet. Entrainment of the ambient medium causes a jet to expand and reduces the ability of the jet to penetrate e.g. hot metal. Entrainment of the ambient medium is minimised in a coherent jet by, for example, surrounding a jet of gas with a flame envelope or with a gas envelope.

A coherent jet of gas maintains its original diameter for a longer distance than a conventional, turbulent jet and can thus penetrate further into the molten steel and entrain slag further into the steel. Improved penetration of the molten steel results in faster and therefore more efficient impurity removal from the steel and ensures improved homogeneity of the steel as the jet also has a mixing effect on the steel. A significant proportion of the reactions between the slag component(s) and the impurities in the molten steel thus take place below the area of the steel/slag interface.

The coherent gas jet may preferably also incorporate solid fines. The solid fines penetrate into the molten steel along with the entrained slag and can provide additional components to react with impure elements or may supplement the entrained slag component(s). As a result more reactions between the component(s) and the impure elements can occur in less time. Thus the duration of the steel treatment can be reduced or a lower impurity level can be reached in the same time interval.

In a preferable embodiment the impure element removed from the molten steel may be predominantly sulphur.

The efficiency of such a desulphurisation treatment may be increased by incorporating particles of CaO with the coherent jet(s). The CaO particles then also penetrate into the molten steel along with the entrained slag. The CaO reacts with sulphur to produce calcium sulphide and oxygen. The oxygen produced may go on to react with another impure elements such as silicon or aluminium to form oxides thereof. Due to their lower densities the oxides progress upwards through the molten steel and are absorbed into the slag layer.

The method may also preferably include generating a circulating flow in the molten steel in order to optimise the penetration of the slag into the molten steel and to improve the homogeneity of the molten steel. Such a circulating flow may preferably be generated by gentle gas bubbling through a bottom plug or plugs in the vessel that contains the steel and slag. The gas bubbling rate is approximately 0.5x10⁻³ to 1.0x10⁻³ Nm³/min/tonne liquid steel and is thus several times lower than that required for the known method of slag/metal mixing.

The present invention also relates to an apparatus for carrying out a method of reducing the amount of impurities in molten steel.

### Brief description of the figures

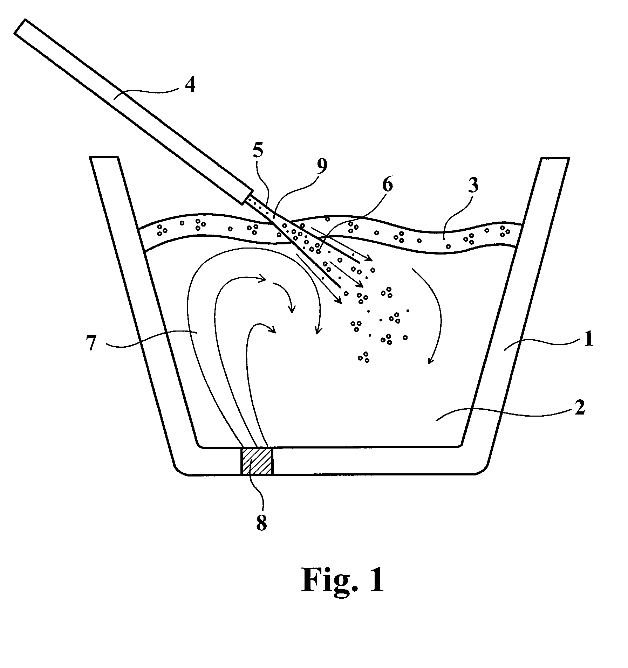

Figure 1 shows a ladle in use, according to an embodiment of the method of the invention.

### Detailed description

Figure 1 shows a ladle 1 in use. The molten steel 2 is at least partially covered by a layer of slag 3 comprising CaO and calcium aluminates. Lance 4 is positioned above the slag layer 3 and emits a coherent jet of argon 5, which penetrates the slag layer and entrains particles of slag 6 into the molten steel. The lance is preferably positioned at an angle of between 15 and 60 degrees from the horizontal to achieve maximum slag entrainment. The coherent jet may also comprise particles of desulphurising agents such as CaO 9. At least one component of the slag layer reacts with at least one type of impure element in the molten steel to form reaction products incorporating the impure element. The lime particles react with sulphur to form calcium sulphide and oxygen. More than one lance may be used. A circulating gas flow may be created in the molten steel by gently bubbling argon 7 through a bottom plug 8 in the ladle. The gentle argon bubbling causes the molten steel to circulate, which improves distribution of the slag and lime particles within the molten steel and helps to homogenise the sulphur content of the molten steel in the ladle.

The scope of the invention is defined by the claims and is not restricted to the particular embodiment described above.

## Claims

1. Method for reducing the amount of impurities in molten steel wherein the molten steel is at least partially covered by a layer of slag and the slag layer comprises at least one component and wherein at least some of the slag layer is entrained into the molten steel and a component or components of the slag layer react with at least one type of impure element in the molten steel **characterised in that** at least some of the slag layer is entrained into the molten steel by means of at least one gas jet emitted from above the molten steel.

2. Method according to any one of the preceding claims wherein at least one of the gas jets is a coherent jet.

3. Method according to claim 2 wherein the coherent gas jet or jets incorporate solid fines.

4. Method according to any one of the preceding claims wherein the impure element removed from the molten steel is predominantly sulphur.

5. Method according to claims 3 or 4 wherein the solid fines comprise particles of desulphurising agents.

6. Method according to any one of the preceding claims wherein a circulating flow is generated in the molten steel and preferably wherein the circulating flow is generated by gentle gas bubbling through a bottom plug.

7. Apparatus for carrying out the method of claim 1 comprising a metallurgical vessel which, in operation, contains molten steel and a slag layer and means for emitting at least one gas jet suitable for entraining at least some of the slag layer into the molten steel wherein the means for emitting the gas jet is wholly positioned above the molten steel.

8. Apparatus according to claim 7 wherein the means for generating at least one gas jet comprises a nozzle suitable for generating a coherent jet.
